# FASCICULE DE BREVET EUROPEEN

(11) **EP 1 188 401 B1**
(45) Date de publication et mention de la délivrance du brevet: **14.12.2005**
(21) Numéro de dépôt: 01402289.1
(22) Date de dépôt: 04.09.2001
(51) Int. Cl.: A47J 37/06

(54) **Appareil électrique de cuisson du type barbecue, à limitation de chauffe**
Elektrischer Gartengrill mit einem Heizungsbegrenzer
Electric barbecue comprising a safety which limits the heating

(30) Priorité: 18.09.2000 FR 0011881
(43) Date de publication de la demande: 20.03.2002
(73) Titulaire: SEB S.A., 69130 Ecully (FR)
(72) Inventeur: Betend-Bon, Alain, 74600 Vieugy (FR)
(74) Mandataire: Somnier, Jean-Louis

(56) Documents cités:
- EP-A- 0 623 303
- EP-A- 0 657 132
- DE-U- 29 502 969
- FR-A- 2 760 957

## Description

La présente invention concerne un appareil électrique de cuisson du type barbecue comprenant une base creuse entourant sur au moins une partie de sa hauteur une cuve à la partie supérieure de laquelle s'étend une résistance électrique chauffante et, au-dessus de la résistance, une grille ou plaque de cuisson, celle-ci pouvant être en métal ou en pierre.

La cuve sert à la fois de support à la grille ou plaque de cuisson et de récipient de collecte des graisses et jus de cuisson. Il est recommandé sinon toujours indispensable d'y mettre de l'eau, d'une part pour éviter la formation de fumées, et d'autre part pour éviter la surchauffe de la base creuse dont le corps peut être au moins partiellement en plastique. La cuve étant en métal, une cuisson avec un moyen d'eau ou sans eau peut se traduire par une chaleur excessive qui, se communiquant à la base en plastique, peut détériorer celle-ci.

L'alimentation électrique de la résistance est généralement commandée par un interrupteur général et le plus souvent par un élément de régulation permettant à l'utilisateur de choisir entre diverses puissances de chauffe selon le mode de cuisson souhaité.

Un commutateur/thermostat de sécurité est également monté en série avec l'interrupteur général et l'élément de régulation, pour couper l'alimentation en cas de surchauffe détectée dans la cuve. Une telle surchauffe intervient soit par manque d'eau, du fait d'un oubli de l'utilisateur ou de l'évaporation en cours de cuisson, soit du fait de l'inflammation d'aliments ou graisses en contact avec la résistance, ou des jus ou graisses tombés dans la cuve.

Un appareil comportant ce type de sécurité est connu par le document FR-A-2 760 957 qui, outre l'interrupteur général et des moyens de régulation thermique permettant de choisir la puissance ou température maximale souhaitée, comporte un interrupteur thermostatique de sécurité, ces divers moyens étant montés en série dans le circuit d'alimentation de la résistance. L'interrupteur thermostatique de sécurité, qui fonctionne à une température de commutation inférieure à la température minimale de commutation des moyens de régulation, permet de détecter par conduction thermique une surchauffe de la cuve et de couper l'alimentation de la résistance au-dessus d'une température donnée de celle-ci.

Cet appareil connu comporte des moyens adaptés à la sécurité recherchée ; par ailleurs, celui décrit dans le document EP 617 909 prévoit, monté en série dans le circuit d'alimentation de la résistance chauffante, un détecteur de présence de la cuve sur la base, celui-ci fonctionnant comme un interrupteur. Toutefois, la réponse à chaque problème par des moyens spécifiques grève le coût de fabrication de l'appareil.

Le problème posé est la réalisation d'un appareil électrique de cuisson du type barbecue qui garantisse la sécurité de l'appareil et de l'utilisateur par des moyens fiables mais simples de coupure automatique de l'alimentation lorsque la température de la résistance atteint soit un seuil prédéterminé soit un seuil maximum fixé par l'utilisateur, et lorsque la température de la cuve atteint un seuil prédéterminé.

L'appareil électrique concerné comprend ainsi, de manière connue, une base creuse entourant sur au moins une partie de sa hauteur une cuve à la partie supérieure de laquelle s'étend une résistance électrique chauffante et, au-dessus de la résistance, une grille ou plaque de cuisson, l'alimentation de la résistance étant commandée par des moyens de commutation, de régulation de la puissance de chauffe permettant de choisir et d'obtenir une température voulue ou donnée de la résistance, et de sécurité apte à couper l'alimentation en cas de surchauffe de la résistance ou de la cuve.

Selon l'invention, lesdits moyens de commutation, de régulation et de sécurité sont réalisés, d'une part, par un seul élément de régulation et tel qu'un thermostat ou un doseur d'énergie, et connecté à la résistance, et d'autre part, par des moyens formant pont de conduction thermique, tels que par une sonde, entre l'intérieur de la cuve et ledit élément de régulation.

Cet élément de régulation peut être préréglé pour des valeurs de température ou de puissance prédéterminés ou pilotables par l'utilisateur, qui choisit ainsi son réglage au moment de l'utilisation suivant la cuisson désirée.

Les moyens de commutation, de régulation et de sécurité sont ainsi constitués par un dispositif unique adapté à couper l'alimentation de la résistance, soit d'une manière prédéterminée, soit à la demande de l'utilisateur, soit lorsque la première des trois températures à savoir température maximale de sécurité de la résistance, ou celle de la cuve, ou température de cuisson fixée par l'utilisateur ou prédéterminée, est atteinte.

L'élément de régulation ou thermostat reçoit d'une part et d'une manière connue, en étant constitué par exemple par un bilame qui s'échauffe quand il est traversé par le courant électrique d'alimentation, et sans qu'il soit besoin d'en décrire davantage dans la présente invention, l'information de la chauffe ou de la température de la résistance avec laquelle il est monté en série et, d'autre part, l'information de la détection de surchauffe éventuelle de la cuve par le pont thermique ou sonde.

En effet, selon l'invention, pour éviter la surchauffe d'une cuve à la partie supérieure de laquelle s'étend une résistance électrique chauffante et comprenant, en montage série avec la résistance, des moyens de commutation, de régulation et de sécurité commutant l'alimentation de la résistance à au moins une température présélectionnable :
- on connecte un seul élément de régulation à la résistance;
- on met en contact direct cet élément de régulation avec un moyen formant pont thermique avec la cuve;
- on apporte à l'élément de régulation une quantité de chaleur, dépendante de la cuve, en provenance de celle-ci et transmise par ledit pont thermique;
- on modifie par cet apport complémentaire de chaleur la ou les températures de commutation effective de l'élément de régulation à un ou des niveaux inférieurs à la ou aux températures présélectionnables.

Dans un mode de réalisation préférentielle ledit pont de conduction thermique est constitué par une sonde en forme de languette en matériau bon conducteur de la chaleur dont une extrémité plonge à l'intérieur de la cuve et l'autre extrémité est en contact avec le boîtier extérieur de l'élément de régulation.

Le résultat est un appareil électrique de cuisson de type barbecue qui répond au problème posé puisqu'il comporte un seul élément de régulation qui, outre sa fonction de réglage connue agit également comme moyen de sécurité de coupure automatique de l'alimentation électrique de la résistance en cas de problème de surchauffe anormale dans la cuve ; ceci est d'autant plus nécessaire lorsque la base support de celle-ci, constituant le carénage extérieur du barbecue, est réalisée en matière plastique qui ne supporte pas en continu la chaleur rayonnée par la résistance, ce qui est le cas de la plupart des barbecues actuels destinés au grand public et dont on veut réduire le coût de fabrication. L'utilisation d'un seul élément de régulation avec les moyens définis par la présente invention en diminue d'autant plus le coût par rapport aux appareils connus à ce jour qui comportent plusieurs éléments assurant les fonctions de commutation, de régulation et de sécurité.

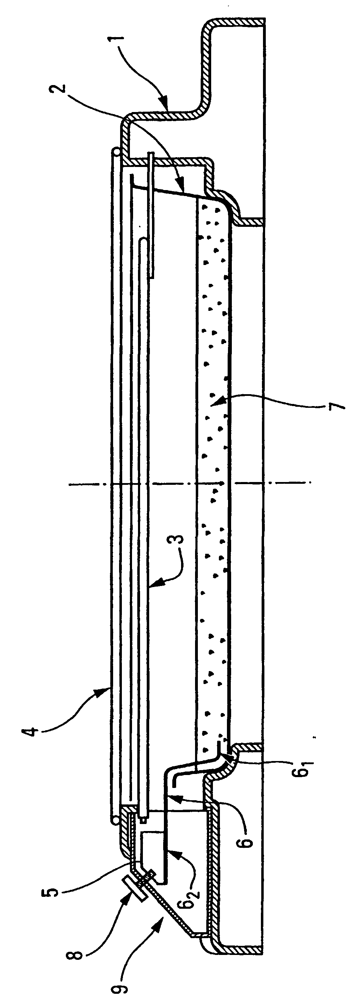

On pourrait citer d'autres avantages de la présente invention mais ceux cités ci-dessus en montrent déjà suffisamment pour en prouver la nouveauté et l'intérêt. La description et la figure ci-jointe représentent un exemple de réalisation de l'invention mais n'ont aucun caractère limitatif : d'autres réalisations sont possibles dans le cadre de la portée et de l'étendue de l'invention en particulier en changeant les dispositions de la cuve et de la base support, ou celles de la sonde formant pont thermique entre cette cuve et l'élément de régulation.

La figure unique jointe représente une coupe simplifiée d'un appareil électrique de cuisson, du type barbecue, suivant l'invention.

L'appareil électrique de cuisson représenté sur la figure est donc un barbecue : il comprend une base creuse 1 réalisée en matériau nécessairement thermo-isolant pouvant être choisi dans une gamme ne supportant pas en continu la chaleur rayonnée par la résistance, pourvue que ce matériau présente les qualités de résistance mécanique permettant à la base de remplir sa fonction de support. Cette base sera par exemple réalisée en polypropylène, matière plastique qui présente de nombreux avantages, rigidité importante et coût peu élevé notamment, mais ne supportant pas en continu une température supérieure à environ 110°C.

Cette base creuse 1 entoure sur au moins une partie de sa hauteur une cuve 2 ou récipient métallique de collecte des jus de cuisson, la périphérie du fond dudit récipient pouvant reposer directement sur un ou plusieurs épaulements formés dans la base creuse 1. A la partie supérieure de cette cuve 2 s'étend une résistance électrique chauffante 3 et au dessus de la résistance une grille ou plaque de cuisson 4.

On remplit ladite cuve 2, ou récipient, d'eau 7 pour limiter la montée en température de ces parois métalliques : on est ainsi assuré que la température atteinte par les parois du récipient 2 ne dépassera pas celle de l'ébullition de l'eau contenue soit environ 100°C ; de plus, du fait de la disposition de la base creuse 1 entourant la paroi latérale du récipient 2, la périphérie du fond de ce dernier peut reposer directement sur un ou plusieurs épaulements de la base et celle-ci assure la protection de l'utilisateur tout en limitant le contact entre le récipient métallique 2 et la base creuse en matière plastique 1.

Les moyens de commutation, de régulation de la puissance de chauffe pour obtenir une température donnée à la résistance 3, et de sécurité adaptée à couper l'alimentation en cas de surchauffe de la résistance 3 ou de la cuve 2, sont réalisés par un seul élément de régulation 5, pilotable par l'utilisateur et/ou préréglé à des valeurs prédéterminées, connecté et alimenté à la résistance 3.

Des moyens tels qu'une sonde forment un pont de conduction thermique 6 entre l'intérieur de la cuve 2 et ledit élément de régulation 5 : suivant le mode de réalisation représenté sur la figure jointe cette sonde est une languette en matériau bon conducteur de la chaleur dont une extrémité 6₁ plonge à l'intérieur de la cuve 2 et l'autre extrémité 6₂ est en contact avec le boîtier extérieur, qui peut être en matériau conducteur, de l'élément de régulation 5. Celui-ci peut être soit un thermostat soit un doseur d'énergie tel qu'un contacteur bimétallique qui en se chauffant ouvre le contact et donc coupe l'alimentation de la résistance quand son auto-échauffement atteint une valeur donnée correspondant au réglage qu'on lui a prédéfini ou défini par l'utilisateur.

Quand on remplit ladite cuve 2 d'eau 7 on immerge une partie du pont de conduction thermique 6, telle que l'extrémité 6₁ de la languette formant ladite sonde ou pont thermique et on règle l'élément de régulation 5 à la position souhaitée qui permet d'obtenir la température voulue au niveau de la résistance 3 tant que la présence de l'eau 7 arrête le rayonnement de cette résistance et refroidit ledit pont thermique 6.

Lorsqu'il n'y a pas assez d'eau 7 dans la cuve 2 formant récipient et réflecteur, on expose ledit pont thermique 6 au rayonnement de la résistance 3, ce qui provoque une montée en température de la sonde 6 qui récupérant cette chaleur la transmet au boîtier de l'élément de régulation 5 : les seuils de commutation effective d'alimentation de la résistance 3 sont alors abaissés par rapport à ceux choisis par l'utilisateur. Dans le cas par exemple d'un bimétal, celui-ci, en s'échauffant par cet apport supplémentaire, s'ouvrira avant le seuil prédéterminé et pilotera donc cette coupure de courant d'alimentation beaucoup plus souvent que dans sa position prédéterminée. On ne pourra réalimenter ladite résistance que quand le pont de conduction thermique 6 se sera refroidi, du fait de l'absence du rayonnement de la résistance 2, permettant alors à l'élément de régulation 5 de reprendre sa position de réglage prédéterminée, soit par préréglage soit choisie par l'utilisateur.

## Revendications

1. Appareil électrique de cuisson du type barbecue comprenant une base creuse (1) entourant sur au moins une partie de sa hauteur une cuve (2) à la partie supérieure de laquelle s'étend une résistance électrique chauffante (3) et, au-dessus de la résistance, une grille ou plaque de cuisson (4), l'alimentation de la résistance étant commandée par des moyens de commutation, de régulation de la puissance de chauffe pour obtenir une température donnée de la résistance (3), et de sécurité adaptés à couper l'alimentation en cas de surchauffe de la résistance ou de la cuve, **caractérisé en ce que** lesdits moyens de commutation, de régulation et de sécurité sont réalisés par un seul élément de régulation (5), connecté et alimentant la résistance (3), et relié à la cuve par des moyens formant pont thermique (6), l'élément de régulation (5) étant adapté à couper l'alimentation de la résistance, soit à la demande de l'utilisateur, soit lorsqu'est atteinte la température maximale de sécurité de la résistance, ou celle de la cuve, ou la température donnée.

2. Appareil électrique selon la revendication 1, **caractérisé en ce que** l'élément de régulation (5) est pilotable par l'utilisateur.

3. Appareil électrique selon l'une quelconque des revendications 1 ou 2, **caractérisé en ce que** ledit pont thermique (6) est constitué par une sonde en forme de languette en matériau bon conducteur de la chaleur dont une extrémité (6₁) plonge à l'intérieur de la cuve (2) et l'autre extrémité (6₂) est en contact avec le boîtier extérieur de l'élément de régulation (5).

4. Appareil électrique selon l'une quelconque des revendications 1 à 3, **caractérisé en ce que** l'élément de régulation (5) est un thermostat.

5. Appareil électrique selon l'une quelconque des revendications 1 à 3, **caractérisé en ce que** l'élément de régulation (5) est un doseur d'énergie.

6. Procédé pour éviter la surchauffe d'une cuve à la partie supérieure de laquelle s'étend une résistance électrique chauffante (3), et comprenant, en montage série avec la résistance (3), des moyens de commutation, de régulation et de sécurité commutant l'alimentation de la résistance à au moins une température présélectionnable, **caractérisé en ce que** :
- on connecte un seul élément de régulation (5) à la résistance (3) ;
- on met en contact direct cet élément de régulation (5) avec un moyen formant pont thermique (6) avec la cuve (2) ;
- on apporte à l'élément de régulation (5) une quantité de chaleur dépendant de l'état de la cuve (2), en provenance de celle-ci et transmise par ledit pont thermique (6) ;
- on modifie par cet apport complémentaire de chaleur les températures de commutation effectives de l'élément de régulation (5) à des niveaux inférieurs aux températures présélectionnables.

7. Procédé suivant la revendication 6, **caractérisé en ce qu'**on utilise comme pont thermique (6) une sonde en forme de languette en matériau bon conducteur de la chaleur dont une extrémité (6₁) plonge à l'intérieur de la cuve (2) et l'autre extrémité (6₂) est en contact avec le boîtier extérieur de l'élément de régulation (5).

8. Procédé suivant l'une quelconque des revendications 6 ou 7, **caractérisé en ce que** :
- on remplit ladite cuve (2) d'eau (7) en immergeant une partie du pont thermique (6) ;
- on règle l'élément de régulation (5) à la position souhaitée qui permet d'obtenir la température voulue au niveau de la résistance (3) tant que la présence de l'eau (7) arrête le rayonnement de cette résistance et refroidit le pont thermique (6).

9. Procédé suivant la revendication 8, **caractérisé en ce que** :
- quand il n'y a pas assez d'eau (7) dans la cuve (2) on expose le pont thermique (6) au rayonnement de la résistance (3) ;
- on apporte la chaleur ainsi récupérée par le pont thermique (6) au boîtier de l'élément de régulation (5) dont les seuils de commutation effective d'alimentation de la résistance sont alors abaissés par rapport à ceux présélectionnés;
- on réalimente ladite résistance (3) quand le pont thermique (6) étant refroidi par absence du rayonnement de la résistance (2) l'élément de régulation (5) reprend sa position de réglage présélectionné.

## Patentansprüche

1. Elektrisches Grillgerät, umfassend
- eine vertiefte Basis (1), die mit mindestens einem Teil ihrer Höhe eine Wanne (2) umgibt, auf deren oberem Teil sich ein elektrischer Heizwiderstand (3) erstreckt und
- ein Grillrost oder eine Grillplatte (4) oberhalb des Widerstandes, wobei die Stromzufuhr des Widerstandes durch Schaltmittel, Regulierungsmittel der Heizleistung , um eine vorgegebene Temperatur des Widerstandes (3) zu erhalten, und zur Unterbrechung der Stromzufuhr im Falle einer Überhitzung des Widerstandes oder der Wanne geeignete Sicherheitsmittel gesteuert wird,
**dadurch gekennzeichnet, dass** die besagten Schalt-, Regulierungs- und Sicherheitsmittel durch ein einziges angeschlossenes, den Widerstand (3) speisendes und an die Wanne durch eine thermische Brücke (6) bildende Mittel angeschlossenes Regulierungselement (5) realisiert sind, wobei das Regulierungselement (5) dazu geeignet ist, die Stromzufuhr des Widerstandes, entweder auf Anfrage des Benutzers oder wenn die maximale Sicherheitstemperatur des Widerstandes, oder die der Wanne oder eine vorgegebene Temperatur erreicht ist, zu unterbrechen.

2. Elektrisches Gerät nach Anspruch 1, **dadurch gekennzeichnet, dass** das Regulierungselement (5) durch den Benutzer steuerbar ist.

3. Elektrisches Gerät nach irgendeinem der Ansprüche 1 oder 2, **dadurch gekennzeichnet, dass** die besagte thermische Brücke (6) aus einer zungenförmigen Sonde aus einem gut die Wärme leitenden Material besteht, deren eines Ende (61) in die Wanne (2) taucht und das andere Ende (62) in Kontakt mit dem äußeren Gehäuse des Regulierungselements (5) ist.

4. Elektrisches Gerät nach irgendeinem der Ansprüche 1 bis 3, **dadurch gekennzeichnet, dass** das Regulierungsmittel (5) ein Thermostat ist.

5. Elektrisches Gerät nach irgendeinem der Ansprüche 1 bis 3, **dadurch gekennzeichnet, dass** das Regulierungsmittel (5) eine Energiedosierungsvorrichtung ist.

6. Verfahren zur Vermeidung der Überhitzung einer Wanne auf deren oberem Teil sich ein elektrischer Heizwiderstand (3) erstreckt und in Serie mit dem Widerstand (3) geschaltet umfassend : Schaltmittel, Regulierurigsmittel und Sicherheitsmittel, die die Stromzufuhr des Widerstandes bei mindestens einer vorwählbaren Temperatur schalten,
**dadurch gekennzeichnet, dass**:
- ein einziges Regulierungselement (5) an den Widerstand (3) angeschlossen ist;
- dieses Regulierungselement (5) mit einem eine thermische Brücke (6) mit der Wanne (2) bildenden Mittel verbunden ist;
- dem Regulierungselement (5) eine von dem Zustand der Wanne (2) abhängende und von dieser kommenden und von der besagten Wärmebrücke (6) übertragene Wärmemenge zugeführt wird;
- durch diese zusätzliche Wärmezufuhr die effektiven Schalttemperaturen des Regulierungselements (5) auf unterhalb der vorwählbaren Temperaturen liegende Niveaus modifiziert werden.

7. Verfahren nach Anspruch 6, **dadurch gekennzeichnet, dass** als thermische Brücke (6) eine zungenförmigen Sonde aus einem gut die Wärme leitenden Material benutzt wird, deren eines Ende (6₁) in die Wanne (2) taucht und das andere Ende (6₂) im Kontakt mit dem äußeren Gehäuse des Regulierungselements (5) ist.

8. Verfahren nach irgendeinem der Ansprüche 6 oder 7, **dadurch gekennzeichnet, dass:**
- die besagte Wanne (2) mit Wasser (7) gefüllt wird, wobei ein Teil der thermischen Brücke (6) eingetaucht wird;
- das Regulierungselement (5) auf die gewünschte Stellung eingestellt wird, die es erlaubt, die gewollte Temperatur am Widerstand zu erhalten solange die Anwesenheit des Wassers (7) die Strahlung dieses Widerstandes anhält und die thermische Brücke (6) abkühlt.

9. Verfahren nach Anspruch 8, **dadurch gekennzeichnet, dass:**
- wenn es nicht genug Wasser (7) in der Wanne (2) gibt, die thermische Brücke (6) der Strahlung des Widerstandes (3) ausgesetzt wird;
- die so von der thermischen Brücke (6) zurückgewonnene Wärme dem Gehäuse des Regulierungselements (5) zugeführt wird, dessen Schwellen zur effektiven Schaltung der Speisung des Widerstandes in Bezug auf die vorgewählten Schwellen gesenkt werden;
- der besagte Widerstand (3) wieder gespeist wird, wenn das Regulierungselement (5) seine vorgewählte Regulierungsstellung wieder einnimmt, wenn die thermische Brücke (6) wegen der Abwesenheit der Strahlung des Widerstandes (2) wieder abgekühlt ist.

## Claims

1. Electric barbecue-type cooking appliance comprising a hollow base (1) surrounding, for at least part of its height, a tray (2), extending above which is an electrical heating resistor (3) and, above the resistor, a cooking grill or plate (4), the supply to the resistor being controlled by means for switching the current, regulating the heating power to achieve a given temperature of the resistor (3), and ensuring safety by cutting off the supply if the resistor or tray overheat, the said appliance being **characterized in that** the said switching, regulating and safety means consist of one regulating element (5) connected to and supplying the resistor (3) and connected to the tray by thermal bridge means (6), the regulating element (5) being able to cut off the supply to the resistor either when the user wishes or when the resistor or tray reaches the maximum safety temperature or the given temperature.

2. Electric appliance according to Claim 1, **characterized in that** the regulating element (5) is controllable by the user.

3. Electric appliance according to either of Claims 1 and 2, **characterized in that** the said thermal bridge (6) is a probe in the form of a strip of material that is a good heat conductor, one end (6₁) of which extends into the interior of the tray (2) and the other end (6₂) of which is in contact with the external housing of the regulating element (5).

4. Electric appliance according to any one of Claims 1 to 3, **characterized in that** the regulating element (5) is a thermostat.

5. Electric appliance according to any one of Claims 1 to 3, **characterized in that** the regulating element (5) is a power control.

6. Method of preventing overheating of a tray over which there extends an electrical heating resistor (3), and comprising, connected in series with the resistor (3), switching, regulating and safety means that switch the resistor supply at at least one pre-selectable temperature, the said method being **characterized in that**:
- a single regulating element (5) is connected to the resistor (3);
- this regulating element (5) is placed in direct contact with a means forming a thermal bridge (6) with the tray (2);
- the regulating element (5) is supplied with a quantity of heat that depends on the condition of the tray (2), this heat coming from the tray and being transmitted by the said thermal bridge (6); and
- the actual switching temperatures of the regulating element (5) are modified by this extra supply of heat to levels lower than the pre-selectable temperatures.

7. Method according to Claim 6, **characterized in that** the thermal bridge (6) is a probe in the form of a strip of material that is a good heat conductor, one end (6₁) of which extends into the interior of the tray (2) and the other end (6₂) of which is in contact with the external housing of the regulating element (5).

8. Method according to either of Claims 6 and 7,
**characterized in that**:
- the said tray (2) is filled with water (7) so that a part of the thermal bridge (6) is submerged; and
- the regulating element (5) is set at the desired position which gives the desired temperature of the resistor (3) as long as the presence of the water (7) arrests the radiation from this resistor and cools the thermal bridge (6).

9. Method according to Claim 8, **characterized in that**:
- when there is not enough water (7) in the tray (2), the thermal bridge (6) is exposed to the radiation of the resistor (3);
- the heat thus absorbed by the thermal bridge (6) is transmitted to the housing of the regulating element (5) so that its thresholds of actual switching of the resistor supply are made lower than the pre-selected thresholds; and
- the supply to the said resistor (3) is reestablished when, the thermal bridge (6) having been cooled by the absence of radiation from the resistor (3), the regulating element (5) returns to its pre-selected regulating position.
